# EUROPEAN PATENT APPLICATION

(11) **EP 3 273 648 A1**
(43) Date of publication of application: **24.01.2018**
(21) Application number: 16768492.7
(22) Date of filing: 11.03.2016
(51) Int. Cl.: H04L 12/70, G06F 9/445, G06F 9/46

(54) **SYSTEM AND METHOD**

(30) Priority: 20.03.2015 JP 2015058691
(71) Applicant: NTT DOCOMO, INC., Chiyoda-ku Tokyo 100-6150 (JP)
(72) Inventor: SHIMOJOU Takuya, Tokyo 100-6150 (JP); TAKANO Yusuke, Tokyo 100-6150 (JP); TAMURA Motoshi, Tokyo 100-6150 (JP); KHAN Ashiq, Tokyo 100-6150 (JP)
(74) Representative: Viering, Jentschura & Partner mbB Patent- und Rechtsanwälte
(86) International application number: PCT/JP2016/057834
(87) International publication number: WO 2016/152589

(57) **Abstract**

A system and a method that can allocate a service to a slice without wasteful use of resources are provided.

A storing unit (31) stores a function connection table. A function information acquisition unit (11) acquires the function connection information, and a function extraction unit (12) extracts a common function to a plurality of slices by using the function connection information. A slice having the extracted function is created by a resource request unit (34) and a function addition request unit (35). A service allocation unit (36) generates, for the created slice, function connection information based on function information indicating the extracted function and execution device information indicating a device that executes the function. The service allocation unit (36) rewrites connection device information in each of function connection information of slices having the common function into execution device information in the generated function connection information.

## Description

### Technical Field

The present invention relates to a system and a method.

### Background Art

A network system using existing virtualization technology virtually divides hardware resources to create slices, which are virtual networks that are logically constructed on a network infrastructure, with use of the virtualization technology disclosed in Non Patent Literature 1. The system then allocates a service to each of the slices and thereby provides the service using a network in each of the slices that are isolated from one another. Thus, when allocating a slice to each of services having a variety of requirements, it is possible to easily satisfy the requirement of each service and thereby reduce the signaling loads and the like.

### Citation List

### Non Patent Literature

NPL1: Akihiro Nakao, "Virtualization-node project: Virtualization technology for new generation network", [online], June 2010, National Institute of Information and Communications Technology, [Searched on March 16, 2015], Internet <http://www.nict.go.jp/publication/NICT-News/1006/01.html>

### Summary of Invention

### Technical Problem

In some cases, a service allocated to each slice includes a function that is common to services. If a common function to services is included in each service, the problem of wasteful consumption of resources for the function arises.

The present invention has been accomplished to solve the above problems and an object of the present invention is thus to provide a system and a method that can allocate a service to a slice without wasteful use of resources.

### Solution to Problem

To achieve the above object, a system according to one embodiment of the present invention includes a storage means configured to store, for each slice, function execution information containing function information for identifying a function to be executed by a service allocated to a slice being a virtual network created on a network infrastructure, execution device information indicating a device on the network infrastructure to execute the function, and connected device information indicating a device to be connected to that device, an extraction means configured to extract a common function being a function common to a plurality of slices based on the function information stored in the storage means, an addition means configured to add the common function extracted by the extraction means to a slice different from the plurality of slices, a generation means configured to generate, for the slice where the common function is added by the addition means, function execution information based on function information indicating the common function and execution device information indicating a device to execute the common function, and a rewrite means configured to rewrite connected device information in each of function execution information of the plurality of slices having the common function into execution device information in the function execution information generated by the generation means.

A method according to one embodiment of the present invention is method performed on a network infrastructure, and the method includes an extraction step of, where function execution information containing function information for identifying a function to be executed by a service allocated to a slice being a virtual network created on a network infrastructure, execution device information indicating a device on the network infrastructure to execute the function, and connected device information indicating a device to be connected to that device is stored for each slice, extracting a common function being a function common to a plurality of slices based on the stored function information, an addition step of adding the common function extracted by the extraction step to a slice different from the plurality of slices, a generation step of generating, for the slice where the common function is added by the addition step, function execution information based on function information indicating the common function and execution device information indicating a device to execute the common function, and a rewrite step of rewriting connected device information in each of function execution information of the plurality of slices having the common function into execution device information in the function execution information generated by the generation step.

According to the system and the method described above, because connection device information in each of function connection information of a plurality of slices having the common function is rewritten into execution device information in the function execution information corresponding to the slice to which the common function has been added and which is different from the plurality of slices, when there is a redundant function between a plurality of slices, it is possible to save resources for the function. In other words, it is possible to allocate a service to a slice without wasteful use of resources.

Further, the above-described system may further include a notification means configured to notify an access destination of a service where a function added to a slice by the addition means is the first function. Further, the above-described method may further include a notification step of notifying an access destination of a service where a function added to a slice by the addition step is the first function. In this case, because the system makes a notification of change in access destination even when an access destination that executes the first function of a service is changed to the slice to which the common function has been added, a user who uses this service can access appropriately.

### Advantageous Effects of Invention

According to one embodiment of the present invention, it is possible to allocate a service to a slice without wasteful use of resources.

### Brief Description of Drawings

Fig. 1 is a view showing the configuration of a system according to an embodiment of the present invention.
Fig. 2 is a view showing the correspondence between slices and resources.
Fig. 3 is a block diagram of devices included in a system according to an embodiment of the present invention.
Fig. 4 is a view showing a slice management table.
Fig. 5 is a view showing a service management table.
Fig. 6 is a view showing a service correspondence slice management table.
Fig. 7 is a view showing a function connection table.
Fig. 8 is a view showing a change in each slice caused by creation of a common slice.
Fig. 9 is a view showing a change in a function connection table.
Fig. 10 is a hardware configuration diagram of BSS/OSS and the like.
Fig. 11 is a sequence chart according to an embodiment of the present invention.

### Description of Embodiments

Embodiments of a system and a method according to the present invention are described hereinafter with reference to the drawings. Note that, in the description of the drawings, the same elements are denoted by the same reference symbols and redundant description thereof is omitted.

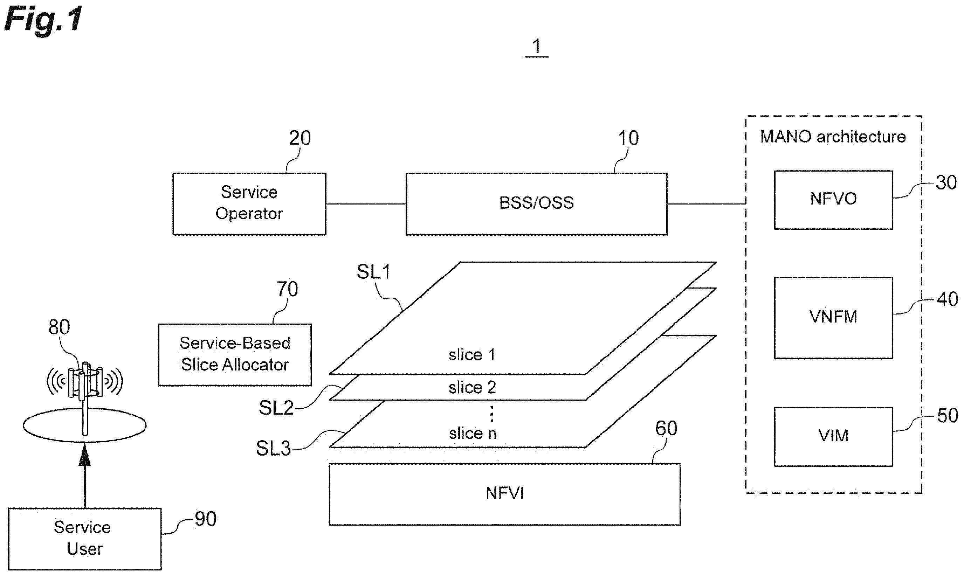

Fig. 1 shows the configuration of a system 1 (system) that includes a BSS/OSS 10 and an NFVO 30 according to this embodiment. The system 1 is a system that allocates a service to a slice, which is a virtual network. The slice is a virtual network or service network that is logically created on a network infrastructure by virtually dividing link and node resources of a network device and coupling the divided resources, and resources in the slices are isolated from one another and do not interfere with one another. The service is a service using network resources such as a communication service (a leased line service etc.) and an application service (a video distribution service, a service using a sensor device such as an embedded device etc.).

As shown in Fig. 1, the system 1 is composed of BSS/OSS (Operations Support System/Business Support System) 10, SO (Service Operator) 20, NFVO30, VNFM40, and VIM (Virtualized Infrastructure Management) 50. Further, the system 1 is composed of NFVI (NFV (Network Functions Virtualisation) Infrastructure) 60, SBSA (Service-Based Slice Allocator) 70, base station 80, and SU (Service User) 90. The NFVO 30, the VNFM 40 and the VIM 50 are MANO (Management & Orchestration) architecture.

Those elements constitute a core network of the system 1. Note that the elements that need to transmit and receive information to and from each other are connected by wired connections or the like so that they can transmit and receive information.

The system 1 according to this embodiment provides a communication function to a mobile communication terminal (e.g. SU 90) by a virtual server that operates in a virtual machine which is implemented on a physical server. Specifically, the system 1 is a virtualized mobile communication network. The communication function is provided to the mobile communication terminal by executing communication processing corresponding to the communication function by the virtual machine.

The NFVI 60 is a network that is formed by physical resources (a group of nodes) that constitute a virtualized environment. Conceptually, the physical resources include computational resources, storage resources and transmission resources. The physical resources are composed of nodes such as a physical server, which is a physical server device that performs communication processing in the system 1, and switches. The physical server is composed of a CPU (core, processor), a memory, and a storage means such as a hard disk. Generally, nodes such as physical servers that constitute the NFVI 60 are collectively located in a point such as a data center (DC). In the data center, the physical servers located therein are connected by a network in the data center, so that they can transmit and receive information to and from each other. Further, there are a plurality of data centers in the system 1. The data centers are connected by a network, and physical servers located in different data centers can transmit and receive information to and from each other through the network.

The SO (Service Operator) 20 is a device that requests a service, and it is, for example, a terminal device (e.g., personal computer etc.) of a business operator that provides services to various users with use of virtual networks.

The BSS/OSS 10 is a node that performs service management in the system 1 and gives instructions related to the communication function in the system 1. For example, when the BSS/OSS 10 receives a new communication function (communication service) addition request from the SO20 the BSS/OSS 10 gives an instruction (service allocation request) to add the new communication function based on the addition request to the NFVO 30. Further, the BSS/OSS 10 can be operated by a telecommunications carrier related to the system 1.

The NFVO 30 is an overall management node (functional entity) that performs management of all virtual networks (slices) constructed on the NFVI 60, which is a physical resource. The NFVO 30 receives an instruction from the BSS/OSS 10 and performs processing in accordance with the instruction. The NFVO 30 performs management of all virtualized networks constructed in the physical resources of the mobile communication network of the infrastructure and communication service. The NFVO 30 implements the communication service that is provided by a virtual network in an appropriate place via the VNFM 40 and the VIM 50. For example, service life cycle management (specifically, creation, update, scale control, event collection, etc.), resource distribution, reservation and allocation management in the entire mobile communication network, service instance management, and policy management (specifically, optimal placement based on resource reservation, allocation, geography, laws and regulations etc.)

The VNFM 40 is a virtual communication function management node (functional entity) that adds a function related to a service to the NFVI 60, which is a physical resource (node). A plurality of VNFMs 40 may be placed in the system 1.

The VIM 50 is a physical resource management node (functional entity) that manages each of physical resources (nodes) in the NFVI 60. Specifically, it performs management of resource allocation, update and collection, association of a physical resource with a virtualized network, and management of a list of hardware resources and SW resources (hypervisor). Generally, the VIM 50 performs management for each data center (exchange). The management of physical resources is performed by a scheme corresponding to the data center. There are several types of management schemes of the data center (implementation schemes of management resources) such as OPENSTACK and vCenter. In general, the VIM 50 is placed for each data center management scheme. Specifically, a plurality of VIMs 50 that respectively manage the physical resources in the NFVI 60 by different schemes from one another are included. Note that the physical resources are not necessarily managed by different schemes for each data center.

Note that the NFVO 30, the VNFM 40 and the VIM 50 are implemented by executing a program on a physical server device (note that, however, the way of implementation on virtualization is not particularly limited, and a management system may be separated and implemented on virtualization). The NFVO 30, the VNFM 40 and the VIM 50 may be implemented by separate physical server devices or may be implemented by the same server device. The NFVO 30, the VNFM 40 and the VIM 50 (i.e. programs for implementing them) may be provided from different vendors.

The NFVO 30 receives a service allocation request from the BSS/OSS 10 and then makes a resource reservation request for slices (slices SL1, SL2 etc.) to the VIM 50. When the VIM 50 reserves resources in a server device and switches that form the NFVIs 60, the NFVO 30 defines slices for those NFVIs 60.

Further, after the NFVO 30 causes the VIM 50 to reserve resources in the NFVI 60, it stores information that defines a slice for the NFVI 60 into a table stored in the NFVO 30. Then, the NFVO 30 makes a request to install software for implementing a function required for the service to the VNFM 40. In response to the installation request, the VNFM 40 installs the software into the NFVI 60 (a node such as a server device, a switch device or a router device) that has been reserved by the VIM 50. Further, the NFVO 30 defines the order of execution of functions in each service.

When the software is installed by the VNFM 40, the NFVO 30 associates the slice and the service into the table stored in the NFVO 30.

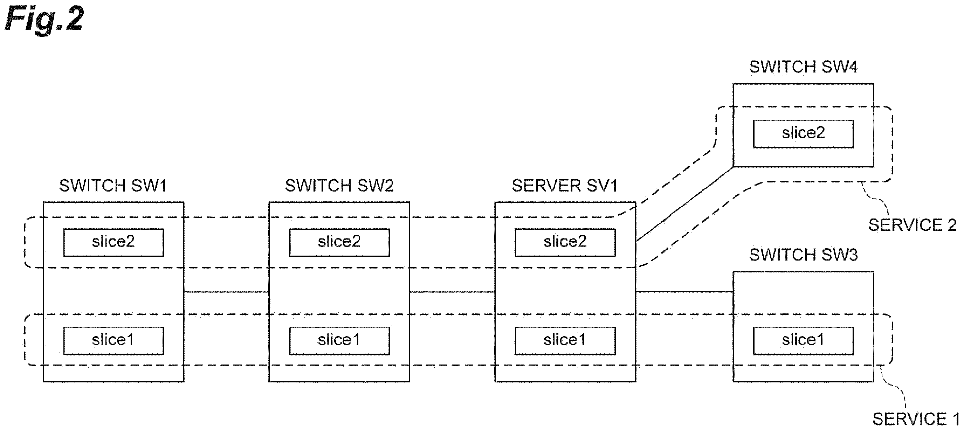

For example, as shown in Fig. 2, when the NFVO 30 makes a resource reservation request for slices (slice 1 and slice 2) to the VIM 50, the VIM 50 gives an instruction indicating that request to a switch SW1, a switch SW2, a server SV1 and a switch SW3. Then, the switch SW1, the switch SW2, the server SV1 and the switch SW3 reserve resources for the slice 1. Likewise, in accordance with an instruction from the VIM 50, the switch SW1, the switch SW2, the server SV1 and a switch SW4 reserve resources for the slice 2.

Further, when resources are reserved in switches or the like, the NFVO 30 allocates the service 1 to the slice 1, and allocates the service 2 to the slice 2. In this manner, the NFVO 30 allocates services to the slices that are isolated from one another. Note that a plurality of services may be allocated to each slice. Further, the NFVO 30 stores information of a service for which a service allocation request can be made from the BSS/OSS 10 into a table stored in the NFVO 30. The service has a function for providing that service. The NFVO 30 also stores information that associates the function and the service into the table.

After the NFVO 30 allocates a service to a slice, it transmits access information that contains the ID of this service and the address (e.g., IP address) of hardware that provides the first function of this service to the BSS/OSS 10.

When the BSS/OSS 10 receives the access information, it notifies each SBSA 70 of the access information. The SBSA 70 is a server device that can communicate with the base station 80, and when a service request is made, with a service ID, from the SU (Service User) 90 to the base station 80, the base station 80 notifies the SBSA 70 of the service ID received from the SU 90.

When the SBSA 70 receives the service ID from the base station 80, it transmits, to the base station 80, the address information of the hardware that provides the first function of the service of the access information corresponding to the service ID received from the base station 80. The base station 80 notifies the SU 90 of this address information. The SU 90 can thereby specify the address to be accessed first to use the service.

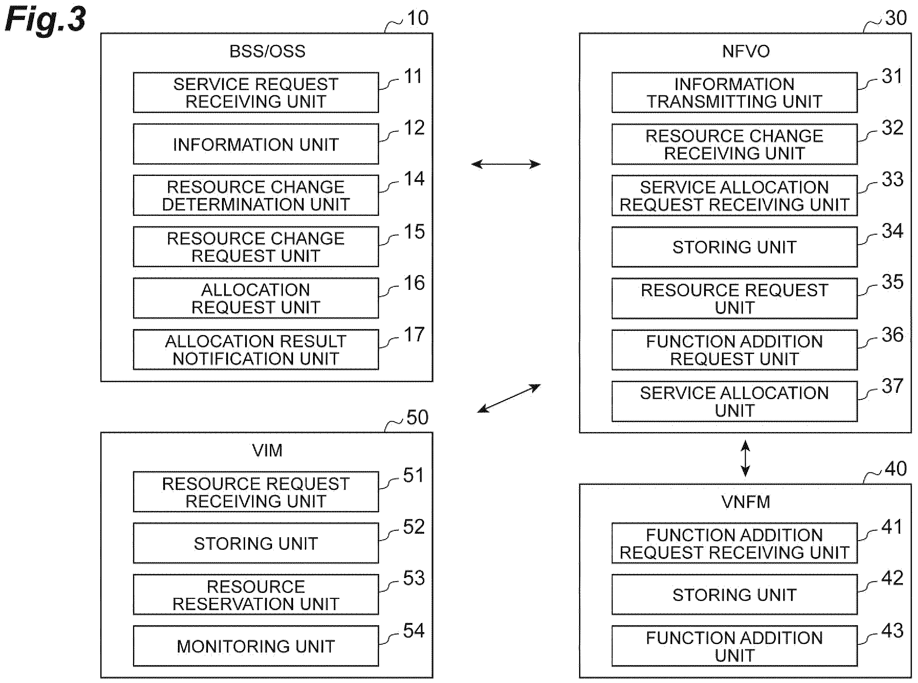

Hereinafter, the functions related to this embodiment of the BSS/OSS 10, the NFVO 30, the VNFM 40 and the VIM 50 are described with reference to Fig. 3. As shown in Fig. 3, the BSS/OSS 10 includes a function information acquisition unit 11, a function extraction unit 12 (function extraction means), a commonalization request unit 13, and an access destination notification unit 14 (notification means).

The function information acquisition unit 11 is a part that acquires function information, which is information about a function to execute a service, for each slice. The function information is information for identifying a function to be executed by a service. To be specific, the function information acquisition unit 11 makes a request to transmit the function information for each slice to the NFVO 30. The function information acquisition unit 11 acquires the function information from the NFVO 30 and sends this function information to the function extraction unit 12. The function information acquisition unit 11 acquires information where a slice and a function are associated with each other, and thereby acquires the function information for each slice. Note that the function information acquisition unit 11 acquires the function information from the NFVO 30 at the timing of receiving a request to allocate a new service from the SO 20. However, the function information acquisition unit 11 may acquire the function information at arbitrary timing.

The function extraction unit 12 is a part that extracts a function common to a plurality of services based on the function information acquired by the function information acquisition unit 11. When the function extraction unit 12 receives the function information from the function information acquisition unit 11, it refers to the function information and extracts a common function. For example, in the case where a function A and a function B are executed in a service 1 in a slice 1, and the function A and a function C are executed in a service 2 in a slice 2, the function extraction unit 12 extracts the function A as the common function. After extracting the function in this manner, the function extraction unit 12 transmits the extracted function and the slice having this function to the commonalization request unit 13.

The commonalization request unit 13 is a part that makes a request to create a slice having the function extracted by the function extraction unit 12. The commonalization request unit 13 receives the extracted function and the slice having this function (function to be commonalized) from the function extraction unit 12, and transmits the function and the slice to the NFVO 30 and makes a request to create a common slice.

The access destination notification unit 14 notifies an access destination that executes the first function of the service. To be specific, the access destination notification unit 14 gives a notification of the access destination of the service where the function included in the slice commonalized by the commonalization request unit 13 is the first function to the access destination that executes the function included in the commonalized slice.

As described above, when a common slice creation request is made to the NFVO 30 by the commonalization request unit 13, the NFVO 30 allocates a function to the commonalized slice. As a result, the function that is allocated to the common slice is the function to be executed first in a certain slice. In this case, the NFVO 30 transmits, to the BSS/OSS 10, a service ID of this function and information of the access destination (address information) of the commonalized function.

The access destination notification unit 14 receives the address information received from the NFVO 30 as described above, and transmits the address information to the SBSA 70. The SBSA 70 receives the address information and, when the service ID contained in this address information is stored, it changes the address of the access destination corresponding to this stored service ID to the received address. The SBSA 70 can thereby make change to the access destination of the function of the commonalized slice, and consequently, even when the address of the function to be executed first in the service is changed, it is possible to provide the service to a user without effect on the change.

The functions of the NFVO 30 are described hereinafter. The NFVO 30 includes a storing unit 31 (storage means), a function information transmitting unit 32, a common slice creation receiving unit 33 (receiving means), a resource request unit 34, a function addition request unit 35 (addition means), and a service allocation unit 36 (generation means, rewrite means).

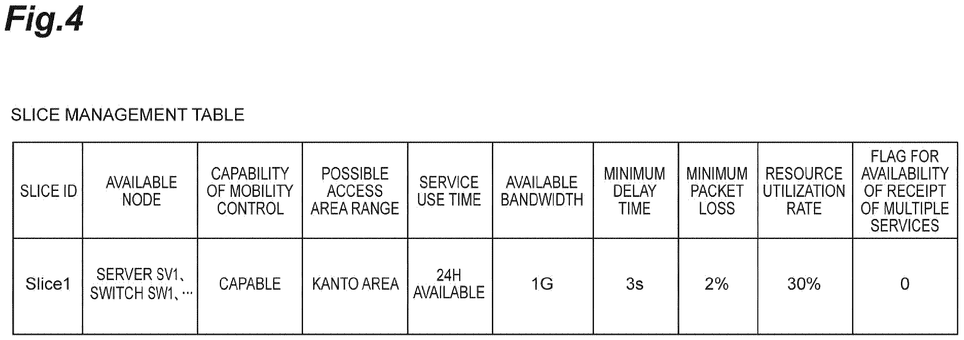

The storing unit 31 is a part that stores information about slices and information about services. The storing unit 31 stores a slice management table as the information about slices. Fig. 4 shows an example of the slice management table. The slice management table has a slice ID, an available node, the capability of mobility control, a possible access area range, a service use time, an available bandwidth, a minimum delay time, a minimum packet loss rate, a resource utilization rate, and a flag for availability of receipt of multiple services.

The slice ID is an ID for uniquely identifying a record which is determined when the NFVO 30 adds a new record to the slice management table. The available node indicates a node that is reserved by the VIM 50 (a node that constitutes the NFVI 60) as a result of making a resource reservation request to the VIM 50. Information defined by the available node includes information that identifies a node (hardware name etc.) and the amount of resources allocated in each node (a memory occupancy, a CPU occupancy rate etc.). The capability of mobility control is information indicating whether the available node is capable of mobility control or not. The possible access area range is information indicating an accessible area based on the location of the available node. The service use time is information indicating a time when a service is available based on the available node. The available bandwidth is information indicating the maximum bandwidth that can be provided in the available node.

The minimum delay time indicates the minimum delay time based on the available node. The minimum packet loss rate indicates the minimum packet loss rate based on the available resources. The resource utilization rate indicates the utilization rate of resources allocated in the current node. The flag for availability of receipt of multiple services is a value indicating whether a service that is designated to be isolated from another service is allocated or not, and when a service that is designated to be isolated from another service is allocated, information indicating that (e.g., "1") is set.

At the timing when resources are reserved, the resource request unit 34, which is described later, adds information to the slice management table based on the reserved resources.

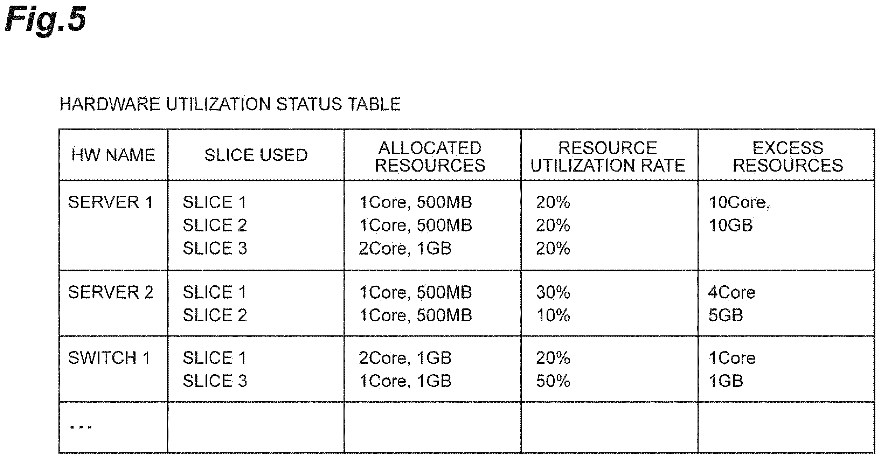

Further, the storing unit 31 stores a service management table as the information about services. Fig. 5 shows the service management table. The service management table is information based on the service requirements when a request for service registration is received from the BSS/OSS 10, and the NFVO 30 registers information based on the service requirements in response to the service registration request. The service management table has a service ID, mobility control, an access area range, a service use time, an allowed lower limit bandwidth, an allowed delay time, an allowed packet loss, a function, and an isolation flag.

The NFVO 30 receives a request to add a new service from the SO 20 through the BSS/OSS 10 and, after resources for the service are reserved, the NFVO 30 adds the above-described information based on the service requirements to the service management table.

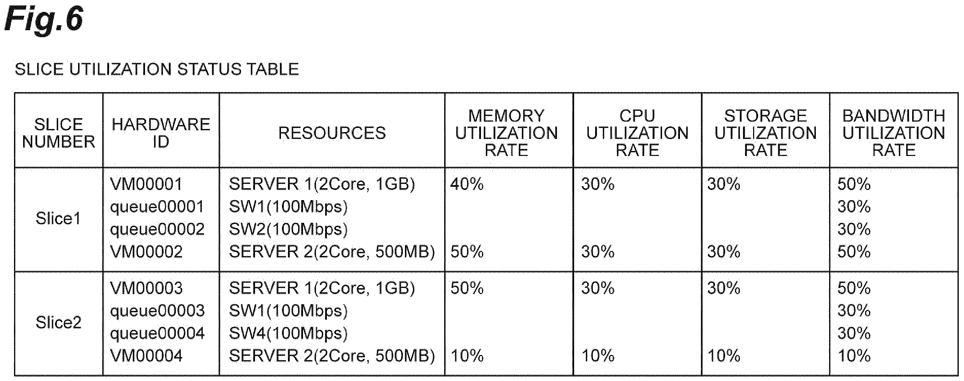

Further, the storing unit 31 stores a service correspondence slice management table to manage information indicating slices where services are defined. Fig. 6 shows an example of the service correspondence slice management table. The service correspondence slice management table has a service ID and a slice ID. The NFVO 30 registers a service ID when information is added to the service management table and a slice ID where the service is to be allocated in the service correspondence slice management table.

Further, the storing unit 31 stores a function connection table that defines the connected state between functions. The function connection table has information indicating a device (server etc.) to execute a function for implementing a service and information indicating a function to be connected to this function (e.g., function to be executed after this function).

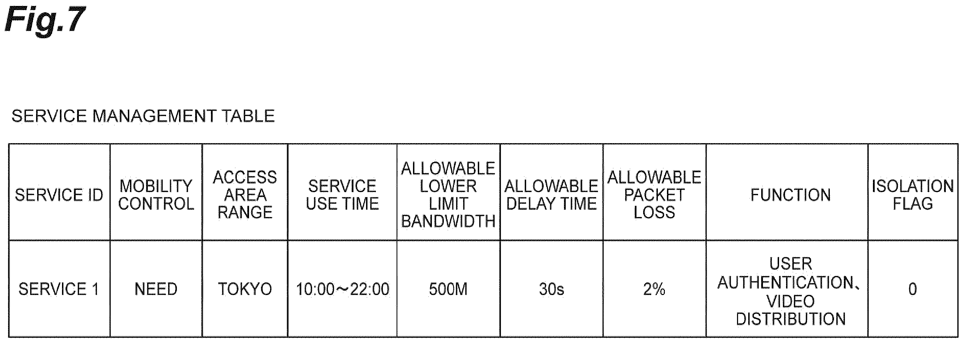

Fig. 7 shows the function connection table. The function connection table contains a slice ID, a service ID, a function NO (function order), a function name, a server/VM name, and a next destination. The slice ID is the ID of a slice to which the function is allocated. The service ID is the ID of a service to execute the function. The function NO is the order of execution in the service. The function name is information that identifies the function. The server/VM name is information indicating a device to which the function is installed (execution device information). The next destination is information (e.g., IP address) indicating a device to execute a function after executing this function (connected device information). In this manner, the storing unit 31 stores the functions to execute services allocated to slices. Each record in the function connection table is called function connection information (function execution information). The NFVO 30 receives a request to add a new service from the SO 20 through the BSS/OSS 10 and, after resources for the service are reserved, the NFVO 30 generates the function connection information for each function of the service, and adds the function connection information to the function connection table.

The function information transmitting unit 32 is a part that transmits the function information, which is information about a function to execute a service, for each slice. The function information transmitting unit 32 receives a request to transmit the function information from the BSS/OSS 10 and then transmits information (information at least containing a function name and a slice) contained in the function connection table stored in the storing unit 31 to the BSS/OSS 10 for each slice.

The common slice creation receiving unit 33 is a part that receives a notification of a function to be communalized from the commonalization request unit 13 of the BSS/OSS 10 and receives a request to create a common slice. The common slice creation receiving unit 33 receives the common slice creation request and then notifies the resource request unit 34 of the function to be communalized and makes a resource reservation request for a slice to which the function is to be allocated (common slice). When the common slice creation receiving unit 33 receives a notification of completion of resource reservation from the resource request unit 34, it then makes a request to add the function to the function addition request unit 35, and notifies the service allocation unit 36 of the function to be communalized and the slice (slice ID) received from the BSS/OSS 10.

After the service allocation unit 36 allocates the service, the common slice creation receiving unit 33 receives a result of allocation from the service allocation unit 36 and transmits the result of allocation to the BSS/OSS 10.

The resource request unit 34 is a part that makes a request for resource reservation to the VIM 50. The resource request unit 34 notifies the VIM 50 of the function received from the common slice creation receiving unit 33 and makes a resource reservation request. When the resource request unit 34 receives a notification of completion of resource reservation (including information indicating available nodes) from the VIM 50, it gives the resource reservation completion notification to the function addition request unit 35.

The function addition request unit 35 is a part that makes a request for function addition to the VNFM 40. The function addition request unit 35 gives a notification of one of the available nodes received from the resource request unit 34 and makes a function addition request to the VNFM 40. When the function addition request unit 35 receives a notification of completion of function addition from the VNFM 40, it gives the notification to the service allocation unit 36.

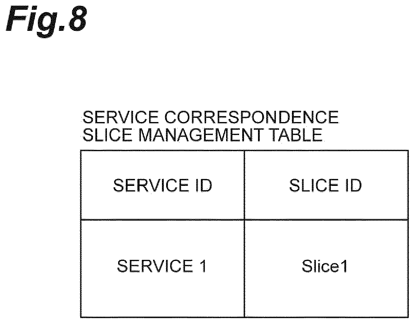

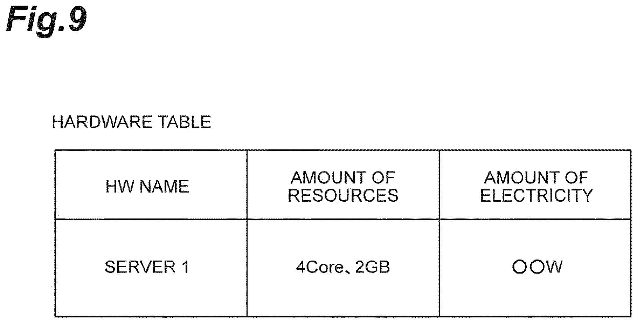

The service allocation unit 36 is a part that generates function connection information based on function information indicating a function extracted by the function extraction unit 12 and execution device information indicating a device to execute the function for the slice (common slice) created by the resource request unit 34 and the function addition request unit 35. Further, the service allocation unit 36 is a part that, after generating the function connection information, rewrites connection device information in each of function execution information of a plurality of slices having the common function into execution device information in the function connection information generated for the common slice. It is thereby possible to manage the coupling between a common slice and a plurality of slices based on which the common slice is created. The detailed processing is described later with reference to Figs. 8 and 9.

The VNFM 40 is described hereinafter. The VNFM 40 includes a function addition request receiving unit 41, a storing unit 42, and a function addition unit 43. The function addition request receiving unit 41 is a part that receives a function addition request from the NFVO 30. The function addition request receiving unit 41 notifies the function addition unit 43 that it has received a function addition request. Further, when the function addition request receiving unit 41 receives software related to an additional function from the NFVO 30, it sends this software also to the function addition unit 43.

When the function addition request receiving unit 41 receives a notification of completion of function addition after addition of a function by the function addition unit 43, it gives a notification of completion of function addition to the NFVO 30.

The storing unit 42 is a part (e.g., repository) that stores software. The storing unit 42 stores software related to communication which is likely to be used in common.

The function addition unit 43 is a part that installs a function. When the function addition unit 43 receives a function addition request from the function addition request receiving unit 41, it carries out installation to the target available node. At the time of installation, when the requested function is the function of software stored in the storing unit 42, the function addition unit 43 installs the software stored in the storing unit 42 to the available node. When, on the other hand, the function addition unit 43 receives software to be installed from the function addition request receiving unit 41, it installs the software. After the installation is completed, the function addition unit 43 gives a notification of completion of installation to the NFVO 30.

The VIM 50 includes a resource request receiving unit 51, a storing unit 52, a resource reservation unit 53, and a monitoring unit 54. The resource request receiving unit 51 is a part that receives a resource reservation request from the NFVO 30. When a resource request is received, the request is notified to the resource reservation unit 53. The storing unit 52 is a part that stores information about resources. The storing unit 52 stores a hardware table (information that defines the resources of each hardware such as capacity), hardware utilization status information (information that defines the utilization status of each hardware and the excess resources) and the like.

The resource reservation unit 53 is a part that reserves resources. When a notification of a resource request is received by the resource request receiving unit 51, the resource reservation unit 53 allocates a slice based on excess resources. After reserving the resources, the resource reservation unit 53 gives a notification to the resource request receiving unit 51. The monitoring unit 54 is a part that monitors the utilization status of the NFVI 60. The monitoring unit 54 reflects a result of monitoring on the resource utilization rate.

Hereinafter, a specific example where the BSS/OSS 10 extracts a common function and, based on a result of extraction, the NFVO 30 edits the function connection table is described with reference to Figs. 8 and 9.

First, the function information acquisition unit 11. of the BSS/OSS 10 acquires function information from the NFVO 30. It is assumed that the function information is information of services allocated to each of a slice 1 and a slice 2. As shown in Fig. 8(A), the functions are connected so that services allocated to the slice 1 can execute the respective functions in the order: "eNB (function of a wireless base station)", "MME (function of handover between base stations)", "SGW (function of relaying user data)" and "PGW (function of a gateway to connect with an external network)". Further, the functions are connected so that services allocated to the slice 2 can execute the respective functions in the order: "WifiAP (function of a Wifi access point)" and "PGW".

Note that "eNB" in the slice 1 is executed in a server SV1, "MME" is executed in a server SV2, "SGW" is executed in a server SV3, and "PGW" is executed in a server SV4. "WifiAP" in the slice 2 is executed in a server SV5, and "PGW" is executed in a server SV6.

Fig. 9(A) shows an example of the function connection table stored in the NFVO 30 in the example of the above-described case. Information corresponding to the slice 1 indicates that the function name of the function NO1 (first function) is "eNB", this function is executed in "server 1/VM1", and the next destination (a device to execute the next function) is "server 2/VM1". Information of the functions NO2, NO3 and NO4 in the slice 1 is defined in the same manner. Note that the next destination in the function NO4 is the Internet (a server for connecting to the Internet) in this example.

Further, information corresponding to the slice 2 indicates that the function name of the function NO1 is " WifiAP", this function is executed in "server 5/VM1", and the next destination is "server 4/VM1". Information of the function NO2 in the slice 1 is defined in the same manner.

In the state of Fig. 8(A), the function "PGW" that is executed in the server SV4 in the slice 1 and the function "PGW" that is executed in the server SV6 in the slice 2 are common. Thus, the function extraction unit 12 extracts the function "PGW" as a common function. The commonalization request unit 13 transmits the function "PGW" and the slice ID "slice 1" and "slice 2" to the NFVO 30 and makes a request to create a common slice.

The common slice creation receiving unit 33 of the NFVO 30 receives a request to generate a common slice from the BSS/OSS 10, the resource request unit 34 makes a request to reserve resources for a common slice (slice 3) to the VIM 50, and the function addition request unit 35 makes a request to add the function "PGW" to the common slice to the VIM 50. Further, the service allocation unit 36 changes a device that executes the function "PGW" in the slice 1 and the slice 2 to a device in the slice 3.

As a result, as shown in Fig. 8(B), the NFVO 30 creates the slice 3, which is a common slice, in a server SV7 in response to the common slice creation request, and adds the function "PGW" to this server SV7. Then, a change is made so that the function "PGW" in the slice 1 and the slice 2 is executed in the server SV7.

As described above, as a result that the PGW that has been executed in the server SV 4 in the slice 1 and the server SV6 in the slice 2 before creation of a common slice is executed in the common slice 3, it is possible to eliminate the need to execute the PGW in both of the server SV4 and the server SV6 and thereby save resources.

Fig. 9(B) shows an example of the function connection table stored in the NFVO 30 in the state of Fig. 8(B). As shown in Fig. 9(B), the service allocation unit 36 newly generates function connection information indicating the function "PGW" of the slice 3 (information where the function NO in the slice 3 is 1). Then, the service allocation unit 36 deletes the function connection information of the function NO4 in the slice 1 and the function NO2 in the slice 2. Furthermore, the service allocation unit 36 changes the next destination in the function NO3 in the slice 1 and the function NO1 in the slice 2 to the server that executes the PGW in the slice 3.

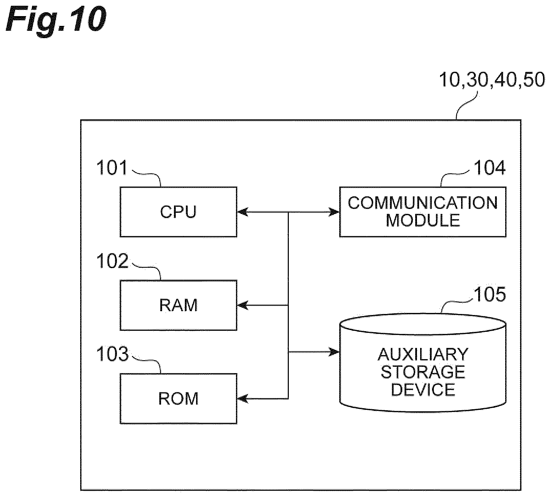

The functions related to this embodiment are described above. Fig. 10 shows the hardware configuration of a server device that implements the BSS/OSS 10, the NFVO 30, the VNFM 40 and the VIM 50. As shown in Fig. 10, the server device is configured to include a computer that has hardware such as one or a plurality of CPU 101, RAM (Random Access Memory) 102 and ROM (Read Only Memory) 103 serving as a main memory device, a communication module 104 (transmitter or receiver) for communication, and an auxiliary storage device 105 (memory) such as a hard disk. Those elements operate by a program or the like, and thereby the functions of the BSS/OSS 10, the NFVO 30, the VNFM 40 and the VIM 50 described above are implemented.

Note that, instead of executing the functions in Fig. 3 by a processor such as the CPU 101, all or some of the functions may be executed by constructing a dedicated integrated circuit (IC). For example, the above-described functions may be executed by constructing a dedicated integrated circuit for performing image processing and communication control.

Software may be called any of software, firmware, middleware, microcode, hardware description language or another name, and it should be should be interpreted widely so as to mean an instruction, an instruction set, a code, a code segment, a program code, a program, a sub-program, a software module, an application, a software application, a software package, a routine, a sub-routine, an object, an executable file, a thread of execution, a procedure, a function and the like.

Further, software, instructions and the like may be transmitted and received via a transmission medium. For example, when software is transmitted from a website, a server or another remote source using wired technology such as a coaxial cable, an optical fiber cable, a twisted pair and a digital subscriber line (DSL) and/or wireless technology such as infrared rays, radio and microwaves, those wired technology and/or wireless technology are included in the definition of the transmission medium.

Note that the BSS/OSS 10, the NFVO 30, the VNFM 40 and the VIM 50 may be implemented by a computer system that is composed of a plurality of server devices. Further, a node different from the above-described nodes included in the system 1 may be implemented by a server device having the above-described hardware configuration. Further, some or all of the functions of the base station 80 and the SU 90 (mobile communication terminal) may be implemented using hardware such as ASIC (Application Specific Integrated Circuit), PLD (Programmable Logic Device) and FPGA (Field Programmable Gate Array). Further, the base station 80 and the SU 90 may be implemented by a computer device that includes a processor (CPU), a communication interface for network connection, a memory and a computer-readable storage medium storing a program. In other words, the base station 80, the SU 90 and the like according to one embodiment of the present invention may function as a computer that performs processing related to the present invention.

The processor, the memory and the like are connected through a bus for communicating information. Further, the computer-readable recording medium is an appropriate storage medium such as a flexible disk, a magneto-optical disk (e.g., compact disk, a digital versatile disc, a Blu-ray (registered trademark) disc), a smartcard, a flash memory device (e.g., a card, a stick, a key drive), a ROM, an EPROM (Erasable Programmable ROM), an EEPROM (Electrically Erasable Programmable ROM), a CD-ROM (Compact Disc-ROM), a RAM, a register, a removable disk, a hard disk, a floppy (registered trademark) disk, a magnetic strip, a database, a server and the like. Further, the program may be transmitted from a network through a telecommunications line. Further, the base station 80 and the SU 90 may include an input device such as an input key and an output device such as a display.

The functional configurations of the base station 80 and the SU 90 may be implemented by the above-described hardware, may be implemented by a software module executed by a processor, or may be implemented by a combination of them. The processor causes an operation system to operate and controls a user terminal as a whole. Further, the processor reads a program, a software module and data from a storage medium to a memory and performs various processing according to them.

Note that the program may be a program that causes a computer to execute the operations described in the above-described embodiment. For example, a control unit of the mobile communication terminal may be implemented by a control program that is stored in the memory and operates on the processor, and another functional block may be implemented in the same manner. The system 1 according to this embodiment has the above-described configuration.

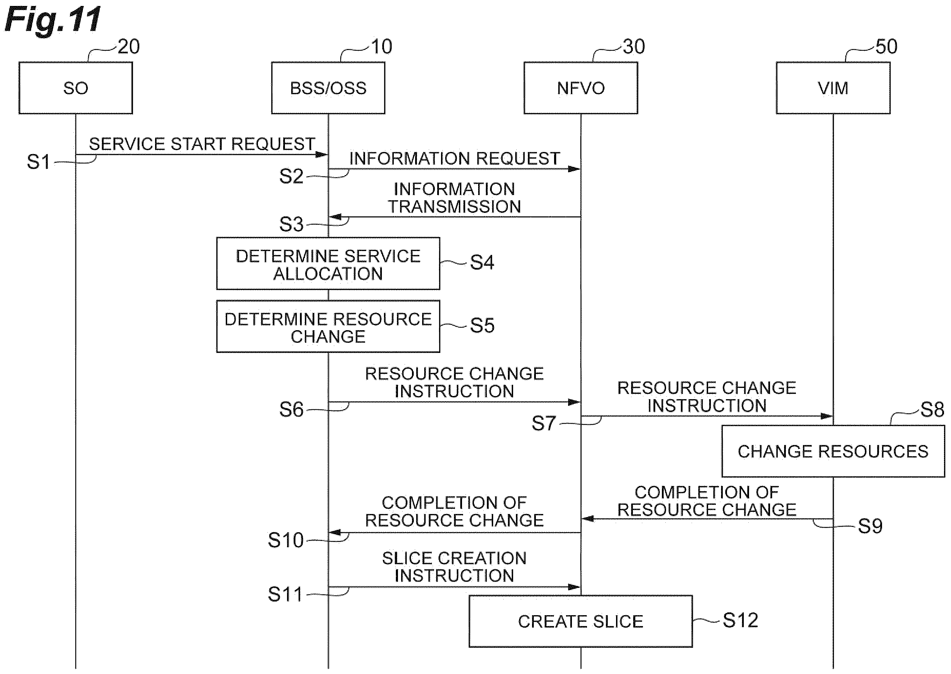

A management method, which is a process executed in the system 1 according to this embodiment, is described hereinafter with reference to the sequence chart of Fig. 11.

First, the function information acquisition unit 11 makes a request to transmit function information to the NFVO 30 at specified timing (Step S1), and receives the function information from the NFVO 30 (Step S2). Next, the function extraction unit 12 checks whether there is a common function of the service (extract a common function) (Step S3). When there is a common function, the commonalization request unit 13 makes a request to commonalize a function to the NFVO 30 (Step S4). In response to this request, the NFVO 30 makes a request to reserve resources to the VIM 50 (Step S5).

The VIM 50 reserves available nodes and their resources (Step S6) and gives a notification of resource reservation to the NFVO 30 (Step S7). Based on the resource reservation notification, the NFVO 30 creates a slice management table of a common slice and thereby creates the common slice (Step S8). Then, the function addition request unit 35 makes a request to create a function to be communalized to the VNFM 50 (Step S9). In response to this request, the VNFM 40 installs the function to the common slice (Step S10) and gives a notification of completion of software installation to the NFVO 30 (Step S11). The NFVO 30 receives the software installation completion notification, and the service allocation unit 36 edits the function connection information (Step S12), and the common slice creation receiving unit 33 gives a notification of completion to the BSS/OSS 10 (Step S13). Note that, in the case where the function allocated by the service allocation unit 36 has changed the beginning of the slice, the common slice creation receiving unit 33 transmits address information containing the service ID and the changed address to the BSS/OSS 10. When the access destination notification unit 14 of the BSS/OSS 10 receives the address information from the NFVO 30, it transmits the address information to the SO 20 (Step S14).

The operations and effects of the system 1 that includes the BSS/OSS 10 and the NFVO 30 according to this embodiment are described hereinafter. In the NFVO 30, the storing unit 31 stores, for each slice, the function connection information containing the function information, the execution device information indicating a device that executes the function, and the connection device information indicating a device to be connected to this device. The NFVO 30 transmits the function connection information to the BSS/OSS 10 at specified timing. In the BSS/OSS 10, the function information acquisition unit 11 acquires the function connection information, and the function extraction unit 12 extracts a common function to a plurality of slices by using the function connection information. In response to a slice creation request by the commonalization request unit 13 of the BSS/OSS 10, a slice having the extracted function is created by the resource request unit 34 and the function addition request unit 35 of the NFVO 30. The service allocation unit 36 generates, for the created slice, the function connection information based on the function information indicating the extracted function and the execution device information indicating a device that executes the function. The service allocation unit 36 rewrites the connection device information in each of the function connection information of slices having the common function into the execution device information in the generated function connection information described above.

In this case, because the connection device information in each of the function connection information of a plurality of slices having the common function is rewritten into the execution device information of the function execution information corresponding to the newly created slice, when there is a redundant function between a plurality of slices, it is possible to save resources for the function. Thus, it is possible to allocate a service to a slice without wasteful use of resources.

Further, the service allocation unit 36 changes information of a device that executes a common function in slices to which a plurality of services are allocated into information of a device that executes a communalized function in a slice created by the resource request unit 34 and the function addition request unit 35. In this case, the common function that has been executed in the plurality of slices can be executed in the slice created by the resource request unit 34 and the function addition request unit 35.

Further, the access destination notification unit 14 may notify the access destination of a service where a function contained in a commonalized slice is the first function. In this case, because the function extraction device makes a notification of change in access destination even when an access destination that executes the first function of a service is changed to a function of a communalized slice, a user who uses this service can access appropriately.

Note that, although the case where the function extraction unit 12 of the BSS/OSS 10 extracts a common function is described in the above embodiment, the NFVO 30 may extract a common function.

Further, although the case where the function addition request unit 35 adds a function to be communalized to a slice that is created after the common slice creation receiving unit 33 receives a common slice creation request is described in the above embodiment, a function to be communalized may be added to a slice created in advance (e.g., a slice to which no service is allocated).

Note that the term "determining" used in this specification includes a variety of operations. For example, "determining" can include calculating, computing, processing, deriving, investigating, looking up (e.g., looking up in a table, a database or another data structure), ascertaining and the like. Further, "determining" can include resolving, selecting, choosing, establishing, comparing and the like.

Further, the description "based on" used in this specification does not mean "based only on" unless otherwise noted. In other words, the description "based on" means both of "based only on" and "based at least on".

As long as "including", "comprising" and transformation of them are used in the present specification or claims, those terms are intended to be comprehensive like the term "comprising". Further, the term "or" used in the present specification or claims is intended not to be exclusive OR.

The term "connected" or every transformation of this term means every direct or indirect connection or coupling between two or more elements, and it includes the case where there are one or more intermediate elements between two elements that are "connected" to each other. The connection between elements may be physical connection, logical connection, or a combination of them. When used in this specification, it is considered that two elements are "connected" to each other by using one or more electric wires, cables and/or printed electric connections and, as several non-definitive and non-comprehensive examples, by using electromagnetic energy such as electromagnetic energy having a wavelength of a radio frequency region, a microwave region and an optical (both visible and invisible) region.

The mobile communication terminal can be also called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or several other appropriate terms.

The procedure, the sequence, the flowchart and the like in each aspect/embodiment described in this specification may be in a different order unless inconsistency arises. For example, for the method described in this specification, elements of various steps are described in an exemplified order, and it is not limited to the specific order described above.

Each aspect/embodiment described in this specification may be used alone, may be used in combination, or may be used by being switched according to the execution. Further, a notification of specified information (e.g., a notification of "being X") is not limited to be made explicitly, and it may be made implicitly (e.g., a notification of the specified information is not made).

Although the present invention is described in detail in the foregoing, it is apparent to those skilled in the art that the present invention is not restricted to the embodiment described in this specification. The present invention can be implemented as a modified and changed form without deviating from the spirit and scope of the present invention defined by the appended claims. Accordingly, the description of the present specification is given merely by way of illustration and does not have any restrictive meaning to the present invention.

### Reference Signs List

1...system, 10...BSS/OSS, 11...function information acquisition unit, 12...function extraction unit, 13...commonalization request unit, 14...access destination notification unit, 20...SO, 30...NFVO, 31...storing unit, 32...function information transmitting unit, 33...common slice creation receiving unit, 34...resource request unit, 35...function addition request unit, 36...service allocation unit, 40...VNFM, 41...function addition request receiving unit, 42...storing unit, 43...function addition unit, 50...VIM, 51...resource request receiving unit, 52...storing unit, 53...resource reservation unit, 54...monitoring unit, 60...NFVI, 70...SBSA, 80...base station, 90... SU, 101...CPU, 102...RAM, 103...ROM, 104...communication module, 105...auxiliary storage device

## Claims

1. A system comprising:
a storage means configured to store, for each slice, function execution information containing function information for identifying a function to be executed by a service allocated to a slice being a virtual network created on a network infrastructure, execution device information indicating a device on the network infrastructure to execute the function, and connected device information indicating a device to be connected to that device;
an extraction means configured to extract a common function being a function common to a plurality of slices based on the function information stored in the storage means;
an addition means configured to add the common function extracted by the extraction means to a slice different from the plurality of slices;
a generation means configured to generate, for the slice where the common function is added by the addition means, function execution information based on function information indicating the common function and execution device information indicating a device to execute the common function; and
a rewrite means configured to rewrite connected device information in each of function execution information of the plurality of slices having the common function into execution device information in the function execution information generated by the generation means.

2. The system according to Claim 1, further comprising
a notification means configured to notify an access destination of a service where a function added to a slice by the addition means is the first function.

3. A method performed on a network infrastructure, comprising:
an extraction step of, where function execution information containing function information for identifying a function to be executed by a service allocated to a slice being a virtual network created on a network infrastructure, execution device information indicating a device on the network infrastructure to execute the function, and connected device information indicating a device to be connected to that device is stored for each slice, extracting a common function being a function common to a plurality of slices based on the stored function information;
an addition step of adding the common function extracted by the extraction step to a slice different from the plurality of slices;
a generation step of generating, for the slice where the common function is added by the addition step, function execution information based on function information indicating the common function and execution device information indicating a device to execute the common function; and
a rewrite step of rewriting connected device information in each of function execution information of the plurality of slices having the common function into execution device information in the function execution information generated by the generation step.

4. The method according to Claim 3, further comprising:
a notification step of notifying an access destination of a service where a function added to a slice by the addition step is the first function.
